# EUROPÄISCHE PATENTSCHRIFT

(11) **EP 2 805 074 B1**
(45) Veröffentlichungstag und Bekanntmachung des Hinweises auf die Patenterteilung: **20.09.2017**
(21) Anmeldenummer: 13700584.9
(22) Anmeldetag: 18.01.2013
(51) Int. Cl.: F16C 19/52, F16C 33/32, F16C 33/34, G01M 13/04, G01P 3/44, G01P 3/48

(54) **WÄLZKÖRPER UND SENSIERVERFAHREN**
ROLLING BODY AND SENSING METHOD
ÉLÉMENT ROULANT ET PROCÉDÉ DE DÉTECTION

(30) Priorität: 20.01.2012 DE 102012200781
(43) Veröffentlichungstag der Anmeldung: 26.11.2014
(73) Patentinhaber: Aktiebolaget SKF, 415 50 Göteborg (SE)
(72) Erfinder: CHRISTIANSSON, Goran, NL-3762 XJ Soest (NL); GRAF, Jens, 97422 Schweinfurt (DE); OLSCHEWSKI, Armin, 97422 Schweinfurt (DE); STUBENRAUCH, Arno, 97491 Aidhausen (DE); ZIEGLER, Sebastian, 97535 Wasserlosen (DE)
(74) Vertreter: Kuhstrebe, Jochen
(86) Internationale Anmeldenummer: PCT/EP2013/050976
(87) Internationale Veröffentlichungsnummer: WO 2013/107886

(56) Entgegenhaltungen:
- DE-A1- 10 314 295
- DE-A1-102004 026 246
- DE-A1-102007 009 093
- DE-A1-102008 061 280
- DE-A1-102010 020 759
- DE-U1-202011 002 485

## Beschreibung

Die Erfindung geht aus von einem Wälzkörper nach dem Oberbegriff des Anspruchs 1.

Es ist ein Wälzkörper mit einer Sensoreinheit bekannt. Die Sensoreinheit ist durch vier Dehnungsmessstreifen gebildet, welche zu einer Registrierung von Verformungen des Wälzkörpers vorgesehen sind. DE 20 2011 002 485 U1 offenbart die Merkmale des Oberbegriffs des Anspruchs 1. Die Aufgabe der Erfindung besteht insbesondere darin, einen gattungsgemäßen Wälzkörper mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Wälzkörper für ein Wälzlager mit wenigstens einer Sensoreinheit.

Es wird vorgeschlagen, dass die Sensoreinheit dazu vorgesehen ist, bei wenigstens einem Betriebsvorgang, bei welchem sich der Wälzkörper bewegt, einen Schlupf des Wälzkörpers zu sensieren. Unter "vorgesehen" soll insbesondere speziell ausgelegt und/oder speziell ausgestattet und/oder speziell programmiert verstanden werden. Darunter, dass sich der Wälzkörper "bewegt", soll insbesondere verstanden werden, dass sich der Wälzkörper relativ zu einem Innenring und/oder einem Außenring des Wälzlagers bewegt. Unter einem "Schlupf" des Wälzkörpers soll insbesondere eine Bewegung des Wälzkörpers relativ zu einem Lagerring des Wälzlagers verstanden werden, welche sich von einem Abrollen des Wälzkörpers auf dem Lagerring unterscheidet, wobei insbesondere ein Gleiten des Wälzkörpers auf dem Lagerring erfolgt. Insbesondere erfolgt das Sensieren qualitativ und vorzugsweise quantitativ. Mit einer erfindungsgemäßen Ausgestaltung kann eine hohe Effizienz erricht werden. Insbesondere kann eine kompakte und kostengünstige Bewegungsüberwachung erreicht werden. Insbesondere kann ein optimaler Wartungszeitpunkt herausgefunden werden. Im Besonderen kann eine fehlerhafte Bauweise, welche zu zu viel Schlupf führt, erkannt werden. Insbesondere kann die Sensoreinheit zur Schlupfsensierung ein Gyroskop aufweisen.

Ferner wird vorgeschlagen, dass die Sensoreinheit wenigstens einen ersten Beschleunigungssensor aufweist. Unter einem "Beschleunigungssensor" soll insbesondere ein Sensor verstanden werden, welcher dazu vorgesehen ist, zumindest eine Beschleunigung und vorzugsweise Beschleunigungen des Wälzkörpers in eine bestimmte Richtung zu sensieren, wobei der Sensor vorzugsweise Beschleunigungen dadurch misst, dass die auf eine Testmasse des Sensors wirkende Trägheitskraft bestimmt wird. Dadurch kann eine konstruktiv einfache Bauweise erreicht werden. Insbesondere kann die Sensoreinheit frei von Gyroskopen sein.

Vorzugsweise weist die Sensoreinheit zumindest einen zweiten Beschleunigungssensor auf. Hierdurch kann eine hohe Präzision und insbesondere ein präzises Sensieren des Schlupfs erreicht werden.

Mit Vorteil ist der erste Beschleunigungssensor dazu vorgesehen, wenigstens eine Beschleunigung des Wälzkörpers senkrecht zu einer Hauptsymmetrieachse des Wälzkörpers zu sensieren. Unter einer "Hauptsymmetrieachse" des Wälzkörpers soll insbesondere eine Achse verstanden werden, welche eine Symmetrieachse in Bezug auf eine Rotationssymmetrie einer Lauffläche des Wälzkörpers bildet, wobei die Lauffläche vorzugsweise bei einer Drehung der Lauffläche um einen beliebigen Winkel um die Achse auf sich selbst abgebildet wird. Hierdurch kann eine effektive Sensierung erreicht werden.

In einer bevorzugten Ausgestaltung der Erfindung liegt eine Testmasse des ersten Beschleunigungssensors auf der Hauptsymmetrieachse des Wälzkörpers. Darunter, dass die Testmasse "auf" der Hauptsymmetrieachse liegt, soll insbesondere verstanden werden, dass die Hauptsymmetrieachse die Testmasse schneidet. Auf diese Weise kann ein einfaches Sensieren und insbesondere ein einfacher Aufbau eines Ausgangssignals des ersten Beschleunigungssensors erzielt werden.

Vorzugsweise ist die Sensoreinheit dazu vorgesehen, eine Position des Schwerpunkts des Wälzkörpers in einem Inertialsystem zu messen. Dadurch kann eine effiziente Schlupfsensierung erreicht werden. Insbesondere kann eine Zuordnung eines gemessenen Schlupfs zu einer Position des Schwerpunkts des Wälzkörpers in einem Inertialsystem erreicht werden.

Mit Vorteil findet der Betriebsvorgang statt, während eine axiale Richtung des Lagers schräg oder senkrecht zu einer vertikalen Richtung ausgerichtet ist. Dabei kann ein einfaches Sensieren erreicht werden.

Ferner wird ein Wälzlager mit dem Wälzkörper vorgeschlagen, wodurch eine hohe Effizienz erreichbar ist.

Außerdem wird eine Windkraftanlage mit dem Wälzlager vorgeschlagen, wodurch eine hohe Effizienz erreichbar ist. Ferner kann das Wälzlager insbesondere auch bei Transportvorrichtungen im Bergbau oder bei Lagereinrichtungen von Schiffen oder insbesondere bei Großgetrieben eingebaut sein.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.
Fig. 1 zeigt eine Windkraftanlage mit einem Wälzlager,
Fig. 2 zeigt schematisch das einen erfindungsgemäßen Wälzkörper aufweisende Wälzlager,
Fig. 3 zeigt eine schematische Seitenansicht des Wälzkörpers,
Fig. 4 zeigt ein Ausgangssignal eines Beschleunigungssensors des Wälzkörpers, wobei ein Beitrag der Erdbeschleunigung größer ist als ein Beitrag einer Zentrifugalkraft, und
Fig. 5 zeigt einen Polarplot, wobei der Winkel des Polarplots die Position des Schwerpunkts des Wälzkörpers im Wälzlager in Bezug auf einen Mittelpunkt des Wälzlagers angibt und auf den Achsen des Polarplots die Eigenrotationsgeschwindigkeit des Wälzkörpers aufgetragen ist.

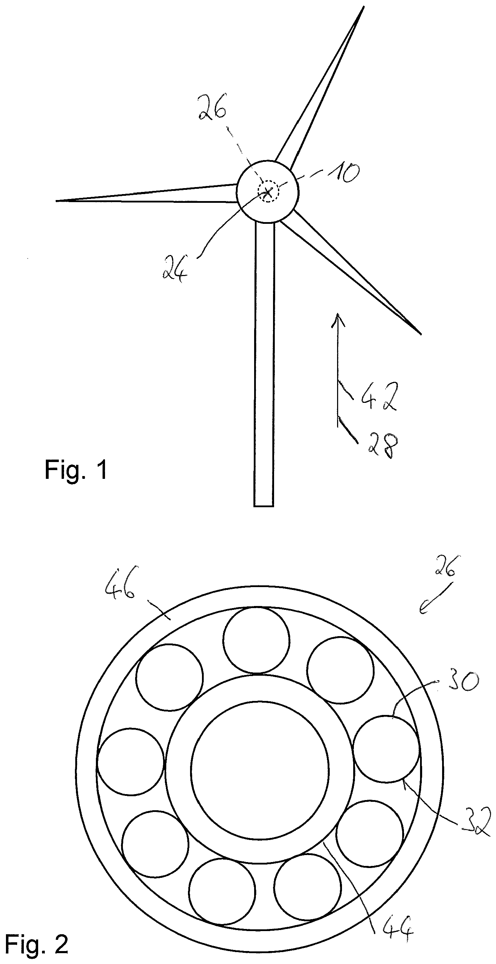

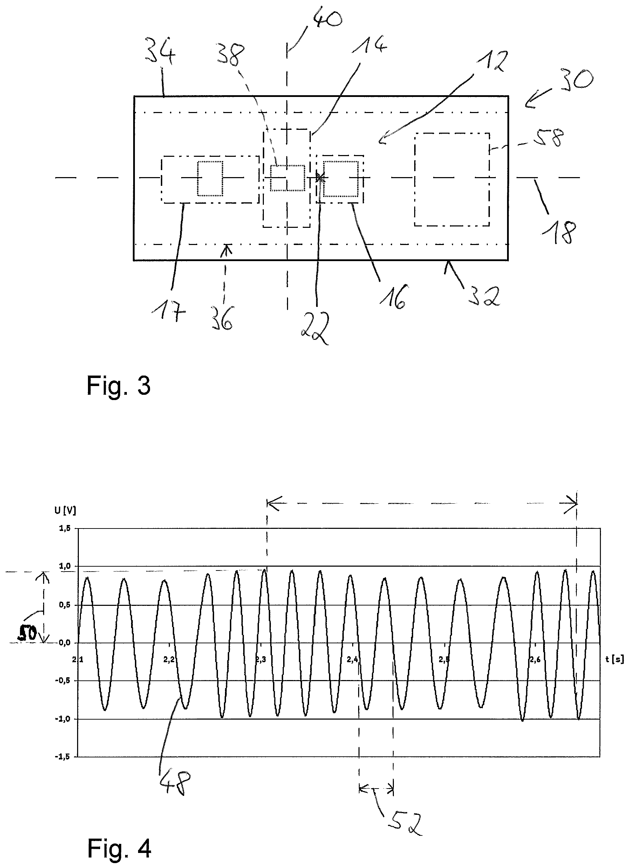

Figur 1 zeigt eine Windkraftanlage mit einem Wälzlager 26, welches einen erfindungsgemäßen Wälzkörper 30 (Figur 2) aufweist. Das Wälzlager 26 ist als Zylinderrollenlager ausgebildet und weist eine axiale Richtung 24 auf, welche senkrecht zu einer vertikalen Richtung 28 ist. Der Wälzkörper 30 weist eine Lauffläche 32 (Figur 3) auf, welche dazu vorgesehen ist, bei einem Betrieb des Wälzlagers 26 auf korrespondierenden Flächen des Wälzlagers 26 abzurollen. Ferner weist der Wälzkörper 30 ein einstückig ausgebildetes Wälzkörperelement 34 mit einer Ausnehmung 36 auf. Das Wälzkörperelement 34 ist hohlzylinderförmig ausgebildet, so dass die Ausnehmung 36 die Form eines Kreiszylinders aufweist. Eine Hauptsymmetrieachse 18 des Wälzkörperelements 34 verläuft parallel zu einer axialen Richtung des hohlzylinderförmig ausgebildeten Wälzkörperelements 34 und durch einen Schwerpunkt des homogen ausgebildeten Wälzkörperelements 34. Eine Sensoreinheit 12 des Wälzkörpers 30, welche in der Ausnehmung 36 angeordnet ist, ist dazu vorgesehen, bei einem Betriebsvorgang, bei welchem sich der Wälzkörper 30 bewegt, einen Schlupf des Wälzkörpers 30 zu sensieren.

Die Sensoreinheit 12 ist an dem Wälzkörperelements 34 befestigt und weist einen ersten, einen zweiten und einen dritten Beschleunigungssensor 14, 16, 17 auf, welche baugleich ausgebildet sind. Die Sensoreinheit 12 ist frei von Gyroskopen. Eine Testmasse 38 des ersten Beschleunigungssensors 14 wird von der Hauptsymmetrieachse 18 geschnitten. Der erste Beschleunigungssensors 14 ist dazu vorgesehen, Beschleunigungen des Wälzkörpers 30 entlang einer Achse 40 zu messen, welche senkrecht zu der Hauptsymmetrieachse 18 ist und welche diese schneidet und welche zu allen Zeitpunkten immer die gleichen Punkte des Wälzkörperelements 34 schneidet. Dieses Messen der Beschleunigung erfolgt dadurch, dass der Beschleunigungssensor 14 Beschleunigungen seiner Testmasse 38 misst. In gleicher Weise ist der zweite Beschleunigungssensors 16 dazu vorgesehen, Beschleunigungen des Wälzkörpers 30 entlang einer Achse zu messen, welche senkrecht zu der Hauptsymmetrieachse 18 ist und welche diese schneidet und welche senkrecht zu der Achse 40 ist und welche zu allen Zeitpunkten immer die gleichen Punkte des Wälzkörperelements 34 schneidet. Der dritte Beschleunigungssensors 17 ist in gleicher Weise dazu vorgesehen, Beschleunigungen des Wälzkörpers 30 entlang der Hauptsymmetrieachse 18 zu messen. Die Hauptsymmetrieachse schneidet die Testmassen 38 der Beschleunigungssensoren 14, 16, 17 jeweils in ihrem Schwerpunkt, wenn sich der Wälzkörper 30 in einem Inertialsystem in Ruhe befindet. Der Beschleunigungssensor 14 ist ein piezoelektrischer Beschleunigungssensor. Ferner kann der Beschleunigungssensor 14 ein kapazitiver oder ein Beschleunigungssensor sein, welcher die Beschleunigung anhand eines Hitzestroms misst, welcher durch ein Heizmittel des Beschleunigungssensors erzeugt wird. Des Weiteren kann der Beschleunigungssensor 14 ein microelectromechanical system, ein sogenanntes MEMS, oder ein nanoelectromechanical system, ein sogenanntes NEMS, sein. Insbesondere mit einem MEMS ist eine hohe Messpräzision möglich.

Während eines Betriebsvorgangs, bei welchem eine Drehung eines Innenrings 44 des Wälzlagers 26 relativ zu einem Außenring 46 des Wälzlagers 26 stattfindet und bei welchem der Wälzkörper 30 sich bewegt, sensieren die Beschleunigungssensoren 14, 16 einen Schlupf des Wälzkörpers 30. Ein Sensieren des Schlupfs ist auch nur mit einem einzigen der Beschleunigungssensoren 14, 16 möglich. Ein Ausgangssignal 48 des ersten Beschleunigungssensors 14, welches in Form einer Spannung vorliegt, ist zeitabhängig (Figur 4) und proportional zu der Beschleunigung der Testmasse 38 des Beschleunigungssensors 14. Eine maximale Amplitude 50 des Ausgangssignals setzt sich zusammen aus der Einwirkung einer Zentrifugalkraft auf den Wälzkörper 30, welche auf den Wälzkörper 30 aufgrund einer Drehung des Wälzkörpers 30 um den Mittelpunkt des Wälzlagers 26 wirkt, und der Erdbeschleunigung. Ist die Drehung schnell, dominiert der Beitrag der Zentrifugalkraft. Ist die Drehung langsam dominiert der Beitrag der Erdbeschleunigung (siehe Figur 4), wobei in dem Fall, in dem der Beitrag der Zentrifugalkraft dominiert, pro Umlauf des Wälzkörpers 30 um den Mittelpunkte des Wälzlagers 26 eine Drehung weniger von der Sensoreinheit 12 registriert wird. Eine minimale Amplitude des Ausgangssignals 48 resultiert direkt aus der Differenz zwischen der Erdbeschleunigung und der Zentrifugalbeschleunigung, welche aus der Zentrifugalkraft resultiert. Ein Zeitraum 52 zwischen zwei Nulldurchgängen des Ausgangssignals 48, zwischen welchen genaue ein weiterer Nulldurchgang des Ausgangssignals 48 stattfindet, ist ein Zeitraum, in welcher sich der Wälzkörper 30 - in einem Inertialsystem betrachtet - etwa - bis auf eine Drehung der Richtung der Zentrifugalkraft - ein Mal um seine Hauptsymmetrieachse 18 dreht. Der Effekt der Drehung der Richtung der Zentrifugalkraft kann rechnerisch durch eine Berücksichtigung des Variierens der Amplitude des Ausgangssignals 48 berücksichtigt werden (siehe unten). Variieren die Zeiträume zwischen zwei Nulldurchgängen des Ausgangssignals 48, zwischen welcher genau ein weiterer Nulldurchgang des Ausgangssignals 48 stattfindet, mit der Zeit und bleibt dabei die Drehgeschwindigkeit des Innenrings 44 relativ zu dem Außenring 46, welcher in einem Inertialsystem ruht, konstant oder zumindest in etwa konstant, so findet bei der Bewegung des Wälzkörpers 30 Schlupf statt. Bei einer Einstellung des Wälzlagers 26, bei welcher sichergestellt ist, dass zumindest bei einer Rotation des Wälzkörpers 30 kein Schlupf vorliegt, kann aus einem verlängerten Zeitraum 52 Schlupf gefolgert werden. Eine zusätzliche Verwendung des Beschleunigungssensors 16 bei der Schlupfsensierung erhöht die Präzision.

Ferner ist die Sensoreinheit 12 dazu vorgesehen, eine Position des Schwerpunkts 22 des Wälzkörpers 30 in einem Inertialsystem zu messen. Ein Bezugssystem, in dem der Außenring 46 und der Erdboden ruht, wird noch als Inertialsystem angesehen. Weist das Ausgangssignal 48 eine maximale Amplitude auf, so ist der Schwerpunkt 22 bei seiner Bewegungsbahn an einer tiefsten Stelle in Bezug auf die Vertikle 42 angeordnet. Daraus kann näherungsweise ebenfalls auf die Position eines Wälzkörperkäfigs (nicht dargestellt) des Wälzlagers 26 geschlossen werden.

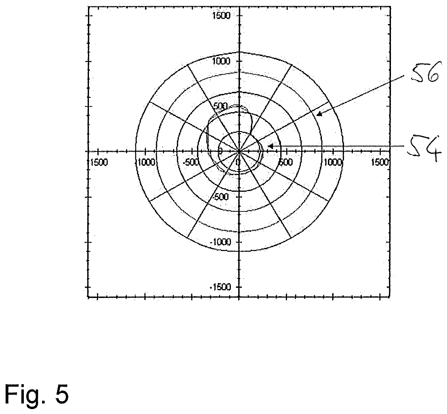

Figur 5 zeigt einen Polarplot, welcher aus Messdaten der Sensoreinheit 12 gewonnen wurde, wobei der Winkel des Polarplots einem Winkel entspricht, der die Position des Schwerpunkts des Wälzkörpers 30 im Wälzlager 26 in Bezug auf einen Mittelpunkt des Wälzlager 26 angibt und auf den Achsen die Eigenrotationsgeschwindigkeit des Wälzkörpers 30 aufgetragen ist, wobei zwei Kurven 54 dargestellt sind, welche jeweils für eine Umrundung des Mittelpunkts des Wälzlagers 26 durch den Wälzkörper 30 stehen und welche die dabei vorherrschende Eigenrotationsgeschwindigkeit des Wälzkörpers 30 wiedergeben. Ferner ist ein Kreis 56 gezeigt, welcher die Soll- Eigenrotationsgeschwindigkeit wiedergibt, welcher der Wälzkörper 30 bei einem reinen Abrollen auf Innen- und Außenring 44, 46 hat. Im in Figur 5 gezeigten Beispiel liegen die Kurven 54 innerhalb des Kreises 56, so dass bei der Bewegung des Wälzkörpers 30 permanent Schlupf auftritt.

Ferner weist der Wälzkörper 30 eine Einheit 58 mit einer Batterie, welche Stromversorgung liefert, einem Mikrokontroller, einer elektronischen Speichereinheit, einer Sende-Empfangseinheit und einer Antenne auf. Die Einheit 58 ist elektrisch mit der Sensoreinheit 12 verbunden. Daten der Sensoreinheit 12 werden von der Einheit 58 per Funkt an eine externe Recheneinheit, welche in der Windkraftanlage angeordnet sein kann, übertragen. Der Mikrokontroller oder die Recheneinheit erfassen den Schlupf mit Hilfe der Daten der Sensoreinheit 12 quantitativ. Tritt pro Zeiteinheit Schlupf auf, welcher ein vorbestimmtes und in der Speichereinheit gespeichertes Maß an Schlupf quantitativ überschreitet, so kann eine Einstelleinheit (nicht gezeigt) der Windkraftanlage die Windkraftanlage deaktivieren, indem die Rotorblätter der Windkraftanlage derart zum Wind gestellt werden, dass kein Antrieb der Windkraftanlage stattfindet. Der Mikrokontroller oder die Recheneinheit berechnen mit Hilfe der Daten der Sensoreinheit 12 ebenfalls die Position des Schwerpunkts 22 des Wälzkörpers 30 in dem genannten Inertialsystem.

Die Schlupfmessung kann entsprechend für andere Lagertypen, wie insbesondere Kegelrollenlager verwendet werden.

**Bezugszeichenliste**

| | |
|---|---|
| 12 | Sensoreinheit |
| 14 | Beschleunigungssensor |
| 16 | Beschleunigungssensor |
| 17 | Beschleunigungssensor |
| 18 | Hauptsymmetrieachse |
| 22 | Schwerpunkt |
| 24 | Richtung |
| 26 | Wälzlager |
| 28 | Richtung |
| 30 | Wälzkörper |
| 32 | Lauffläche |
| 34 | Wälzkörperelement |
| 36 | Ausnehmung |
| 38 | Testmasse |
| 40 | Achse |
| 42 | Vertikale |
| 44 | Innenring |
| 46 | Außenring |
| 48 | Ausgangssignal |
| 50 | Amplitude |
| 52 | Zeitraum |
| 54 | Kurve |
| 56 | Kreis |
| 58 | Einheit |

## Patentansprüche

1. Wälzkörper für ein Wälzlager (26) mit wenigstens einer Sensoreinheit (12),
**dadurch gekennzeichnet, dass**
die Sensoreinheit (12) wenigstens einen ersten Beschleunigungssensor (14) aufweist und dazu vorgesehen ist, bei wenigstens einem Betriebsvorgang, bei welchem sich der Wälzkörper bewegt, einen Schlupf des Wälzkörpers zu sensieren.

2. Wälzkörper nach Anspruch 1, wobei die Sensoreinheit (12) zumindest einen zweiten Beschleunigungssensor (16) aufweist.

3. Wälzkörper nach einem der Ansprüche 1 oder 2, wobei der erste Beschleunigungssensor (14) dazu vorgesehen ist, wenigstens eine Beschleunigung des Wälzkörpers senkrecht zu einer Hauptsymmetrieachse (18) des Wälzkörpers zu sensieren.

4. Wälzkörper nach einem der Ansprüche 1 bis 3, wobei eine Testmasse (38) des ersten Beschleunigungssensors (14) auf einer Hauptsymmetrieachse (18) des Wälzkörpers liegt.

5. Wälzkörper nach einem der vorherigen Ansprüche, wobei die Sensoreinheit (12) dazu vorgesehen ist, eine Position des Schwerpunkts (22) des Wälzkörpers in einem Inertialsystem zu messen.

6. Wälzlager mit einem Wälzkörper nach einem der Ansprüche 1 bis 5.

7. Windkraftanlage mit einem Wälzlager nach Anspruch 6.

8. Sensierverfahren zur Sensierung eines Schlupfs eines Wälzkörpers eines Wälzlagers (26) nach Anspruch 6, wobei bei wenigstens einem Betriebsvorgang, bei welchem sich ein Wälzkörper bewegt, ein Schlupf des Wälzkörpers sensiert wird.

9. Sensierverfahren nach Anspruch 8, wobei das Verfahren durchgeführt wird, während, während eine axiale Richtung (24) des Wälzlagers (26), welches den Wälzkörper aufweist, schräg oder senkrecht zu einer vertikalen Richtung (28) ausgerichtet ist.

## Claims

1. Rolling body for a rolling bearing (26) comprising at least one sensor unit (12),
**characterized in that**
the sensor unit (12) has at least a first acceleration sensor (14) and is intended for sensing a slip of the rolling body in at least one operating step in which the rolling body is moving.

2. Rolling body according to Claim 1, the sensor unit (12) having at least a second acceleration sensor (16).

3. Rolling body according to either of Claims 1 and 2, the first acceleration sensor (14) being intended for sensing at least an acceleration of the rolling body perpendicularly to the main axis of symmetry (18) of the rolling body.

4. Rolling body according to one of Claims 1 to 3, a test mass (38) of the first acceleration sensor (14) lying on a main axis of symmetry (18) of the rolling body.

5. Rolling body according to one of the preceding claims, the sensor unit (12) being intended for measuring a position of the centre of gravity (22) of the rolling body in an inertial system.

6. Rolling bearing comprising a rolling body according to one of Claims 1 to 5.

7. Wind turbine comprising a rolling bearing according to Claim 6.

8. Sensing method for sensing a slip of a rolling body of a rolling bearing (26) according to Claim 6, a slip of the rolling body being sensed in at least one operating step in which the rolling body is moving.

9. Sensing method according to Claim 8, the method being carried out while, while an axial direction (24) of the rolling bearing (26) that has the rolling body is aligned obliquely or perpendicularly in relation to a vertical direction (28).

## Revendications

1. Corps de roulement pour un palier à roulement (26) comprenant au moins une unité de capteur (12),
**caractérisé en ce que**
l'unité de capteur (12) présente au moins un premier capteur d'accélération (14) et, dans le cas d'au moins une opération de fonctionnement dans laquelle le corps de roulement se déplace, est prévue pour détecter un glissement du corps de roulement.

2. Corps de roulement selon la revendication 1, dans lequel l'unité de capteur (12) présente au moins un deuxième capteur d'accélération (16).

3. Corps de roulement selon l'une quelconque des revendications 1 ou 2, dans lequel le premier capteur d'accélération (14) est prévu pour détecter au moins une accélération du corps de roulement perpendiculairement à un axe de symétrie principal (18) du corps de roulement.

4. Corps de roulement selon l'une quelconque des revendications 1 à 3, dans lequel une masse d'essai (38) du premier capteur d'accélération (14) est située sur un axe de symétrie principal (18) du corps de roulement.

5. Corps de roulement selon l'une quelconque des revendications précédentes, dans lequel l'unité de capteur (12) est prévue pour mesurer une position du centre de gravité (22) du corps de roulement dans un système d'inertie.

6. Palier à roulement comprenant un corps de roulement selon l'une quelconque des revendications 1 à 5.

7. Éolienne comprenant un palier à roulement selon la revendication 6.

8. Procédé de détection pour détecter un glissement d'un corps de roulement d'un palier à roulement (26) selon la revendication 6, dans lequel, dans le cas d'au moins une opération de fonctionnement dans laquelle un corps de roulement se déplace, un glissement du corps de roulement est détecté.

9. Procédé de détection selon la revendication 8, dans lequel le procédé est mis en oeuvre pendant, pendant qu'une direction axiale (24) du palier à roulement (26) qui présente le corps de roulement est orientée obliquement ou perpendiculairement à une direction verticale (28).
